# EUROPÄISCHE PATENTSCHRIFT

(11) **EP 2 695 552 B1**
(45) Veröffentlichungstag und Bekanntmachung des Hinweises auf die Patenterteilung: **23.11.2016**
(21) Anmeldenummer: 13179981.9
(22) Anmeldetag: 09.08.2013
(51) Int. Cl.: A47J 27/14

(54) **Gargerät**
Cooking device
Appareil de cuisson

(30) Priorität: 10.08.2012 DE 102012015912
(43) Veröffentlichungstag der Anmeldung: 12.02.2014
(73) Patentinhaber: FRIMA-T SAS, 68270 Wittenheim (FR); FRIMA International AG, 9435 Heerbrugg (CH)
(72) Erfinder: Waßmus, Reinhard, 79395 Neuenburg am Rhein (DE); Lingenheil, Markus, 79206 Breisach/Oberrimsingen (DE)
(74) Vertreter: Prinz & Partner mbB

(56) Entgegenhaltungen:
- EP-A1- 2 583 599
- EP-A2- 1 719 952
- JP-A- 2008 284 010
- US-A- 4 173 925

## Beschreibung

Die Erfindung betrifft ein Gargerät zum Zubereiten von Speisen gemäß dem Oberbegriff des Anspruchs 1.

Gargeräte mit Tiegel sind äußerst universell einsetzbar. Mit ihnen ist es möglich, im Tiegel zu braten, zu kochen, zu frittieren, aufzuwärmen und dergleichen. Die bisherigen Gargeräte mit Garbehältern, wie Tiegel, sind fest mit einem tragenden Gestell verbunden, das entweder bis zum Boden reicht und oftmals durch Rollen verfahrbar ist, oder an einer Wand aufgehängt werden kann. Das hauptsächlich aus Rohren gebildete Gestell ist meist mit einer Blechverkleidung, die das Gehäuse bildet, versehen. Der Tiegel kippt mit dem vorderen Rand zum Entleeren zum Beispiel bei flüssigen Speisen um etwa 60° bis 90° nach unten, um die Speisen aus dem Tiegel in einen Behälter zu überführen.

Die EP 1 719 952 A2 zeigt ein Gargerät mit einem Säulengestell, an dem seitlich zwei schwenkbare Tiegel angeordnet sind, wobei in dem Gestell ein Display untergebracht ist.

Die EP 2 583 599 A1 zeigt ein Gargerät, mit einem schwenkbaren Gargefäß, bei dem in einem seitlichen Rahmenelement Bedieneinrichtungen und andere Elektronikteile angeordnet sind.

Die JP 2008 284010 A zeigt einen Reiskocher mit einem feststehenden Gargefäß, in dessen Gehäuse ein Raum vorgesehen ist, in dem eine Elektronik untergebracht ist und der über einen Lüfter gekühlt wird, der von außen Umgebungsluft ansaugt.

Die US 4,173,925 A zeigt ein Gargerät mit einem auf einem Fuß schwenkbar gelagerten Gargefäß. Hier ist eine Bedienelektrik oder -elektronik am Gestell angebracht.

Die Erfindung hat es sich zum Ziel gesetzt, ein kompakt aufgebautes Gargerät mit Tiegel, z.B. in Form eines Tisch-Gargeräts, auszubilden.

Dies wird bei einem Gargerät der eingangs genannten Art mit den Merkmalen des Anspruchs 1 erreicht. Das Gestell ist das tragende Teil des Gargeräts, welches das Gewicht des oder der Tiegel bis in den Fixiergrund, also den Boden, eine Wand oder, bei einem Auf-Tisch-Gerät, in den Tisch einleitet, wobei in diesem Fall natürlich auch Füße oder einstellbare Füße vorgesehen sein können. Bei den bisherigen Gargeräten waren die elektronischen Bauteile außerhalb des Gestells, zwischen diesem und dem Gehäuse untergebracht, um die Zugänglichkeit für die Montage sicherzustellen.

Die elektronischen Bauteile sind beispielsweise Leiterplatten, die im Gestell selbst platzsparend und sicher untergebracht werden können. Elektrische Bauteile wie Schütze, Trafos, ect., die ein großes Volumen und Gewicht aufweisen, sind ebenfalls im Gestell unterbringbar. Elektronische Bauteile sind eine Untergruppe von elektrischen Bauteilen.

Da das Gestell einen zur Umgebung geschlossenen Kühlraum bildet, sind im Gestell selbst also keine Schlitze für Zuluft oder Abluft vorhanden, die einen gezielten Luftaustausch mit der Umgebung herbeiführen und für einen Transport von kühler Umgebungsluft und Abtransport von heißer Luft sorgen würden. Natürlich können im Bereich von beispielsweise Befestigungsöffnungen noch geringfügige Schlitze vorhanden sein, so dass kein hermetisch abgeschlossener Raum im Inneren des Gestells gebildet ist, separate Kühlluftöffnungen sind jedoch, wie gesagt, nicht vorhanden.

Das Gestell kann durch zusammengesetzte Hohlkörper gebildet sein, beispielsweise durch vorgefertigte, miteinander verschweißte Rohre oder gekantete und miteinander verbundene, z.B. verschweißte Blechteile.

Wenn das Gestell durch ein feststehendes, selbsttragendes Gehäuse des Gargeräts gebildet wird, ist darüber hinaus keine weitere Verkleidung (Einhausung) mehr notwendig. Damit verschmelzen sozusagen Verkleidung und Gestell ineinander, was für eine Minimierung der Bauteile sorgt. Darüber hinaus ist damit die Verkleidung insgesamt sehr stabil und robust, denn sie wird durch das Gestell gebildet. Temperaturbeständige, kratzfeste großvolumige aufgesetzte zusätzliche Verkleidungsschalen und dergleichen können damit zumindest teilweiseüberflüssig werden.

Die bevorzugte Ausführungsform sieht vor, dass sämtliche elektronischen Bauteile ausgenommen von außen sichtbare Displays und von außen bedienbare Schalter innerhalb des Gestells angeordnet sind.

Das erfindungsgemäße Gargerät hat eine aktive Kühleinrichtung für die elektronischen/elektrischen Bauteile, mit wenigstens einer im Inneren des Gestells untergebrachten, elektrisch angetriebenen Kühleinheit. Diese Kühleinheit ist insbesondere ein Kühllüfter. Über diese Kühleinrichtung werden die Bauteile gezielt gekühlt. Darüber hinaus wird die warme Luft im Inneren des Gestells verteilt und kann somit über eine größere Oberfläche gekühlt werden. Diese Idee ist insbesondere bei Auf-Tisch-Geräten sehr vorteilhaft, denn diese sind extrem kompakt.

Die bevorzugte Ausführungsform sieht vor, dass die aktive Kühleinrichtung filterlos ausgeführt ist, das heißt, es ist kein Staub- oder Fettfilter vorhanden, der ausgetauscht werden müsste.

Im Gestell sind Luftleitelemente möglich, die die Luftzirkulation beeinflussen. Damit wird heiße Luft aus den besonders warmen elektronischen oder elektrischen Bauteilen in Abschnitte im Inneren des Gestells geführt, in denen weniger Wärme entsteht.

Eine Ausführungsform der Erfindung sieht vor, dass ein gegenüber dem Gestell als separates Teil ausgebildeter Komponententräger aus Metall, vorzugsweise Leichtmetall wie Aluminium, im Inneren des Gestells vorgesehen ist. An einer Seite trägt der Komponententräger ein oder mehrere elektrische oder elektronische Bauteile. Ein solches Bauteil ist insbesondere ein Solid State Relais, welches zum Schalten von großen Strömen in den Heizsystemen von Gargeräten verwendet wird. Solche Relais produzieren eine starke Abwärme, sind aber auf der anderen

Seite zuverlässig unter einer Temperatur von 90°C zu halten. Der Komponententräger hat zu diesem Zweck Kühlrippen.

Zwischen dem Komponententräger und der Innenseite des Gestells kann ein Kühlkanal gebildet sein, der durch die Rippen in Teilkanäle untergliedert wird. Diese Ausführungsform schafft auf einfache Weise kühlluftführende Kanäle und grenzt den Kühlluftstrom genau ein.

Durch die vorliegende Erfindung wird der gesamte Innenraum des Gestells verwendet, um eine permanente Luftzirkulation zu erzeugen, die einen Wärmestau an den temperaturempfindlichen elektronischen oder elektrischen Bauteilen vermeidet. Es treten keine Wärmestaus auf. Die sogenannte Umluftkühlung, die erzeugt wird, sorgt dafür, dass an den Solid State Relais Temperaturen von 60°C bis 85°C an der Oberfläche herrschen. In den übrigen Abschnitten des Gestells erhöhen sich die Temperaturen auf etwas über 40°C, was die wirksame Wärmeabfuhr durch die vorliegende Erfindung unterstreicht.

Dadurch, dass kein Luftaustausch mit der Umgebung stattfindet, wird auch keine verschmutzte Luft angesaugt, die zu einer abnehmenden Kühlwirkung im Inneren des Gestells führen könnte. Auch ist kein Aufwand für Pflege und Wartung (z.B. durch Reinigung oder Filterwechsel) nötig. Die Gefahr des Eintritts von Dampf Aerosolen oder Wasser aufgrund Undichtigkeiten von Filtern wird ausgeschaltet.

Die vorliegende Erfindung betrifft insbesondere ein sogenanntes Auf-Tisch-Gargerät, welches als Gestell ein Auf-Tisch-Gestell aufweist.

Ein Auf-Tisch-Gestell im Sinne der Erfindung ist lediglich so hoch, dass das gesamte Gargerät insgesamt eine maximale Höhe vom Fuß des Gestells bis zur Oberkante, die durch den Deckel oder durch das gegebenenfalls über den Deckel überstehende Gestell gebildet sein kann, von 400 mm, insbesondere von maximal nur 350 mm aufweist. Um die Tiefe des Gargeräts zu reduzieren und um gleichzeitig den Tiegel möglichst weit nach vorne zu platzieren, hat das erfindungsgemäße Gargerät ein Auf-Tisch-Gestell, das eine komplette Lücke im Bereich des vorderen Randes, das heißt der Vorderseite des Tiegels besitzt. Mit anderen Worten, im Bereich des vorderen Randes, das heißt vor dem Tiegel oder unter dem Tiegel im Bereich des vorderen Randes ist kein Gestell vorhanden.

Die bevorzugte Ausführungsform sieht vor, dass das Gerät sogar an einem zum vorderen Rand angrenzenden seitlichen Rand, das heißt an einer Tiegel-Längsseite, zumindest im Übergangsbereich zum vorderen Rand ebenfalls gestellfrei ausgeführt ist, sodass zumindest der gesamte Eckbereich frei ist.

Wichtig ist natürlich, dass der Schwerpunkt des ganzen Gargeräts immer innerhalb des Mehrecks liegt, das durch die Kontaktstellen des Gestells mit dem Tisch, auf dem es steht, umschrieben ist. Dann kann das Gargerät unabhängig von seinem Befüllgrad und vom Schwenkwinkel des Tiegels nicht kippen.

Insbesondere ist auch längs des gesamten seitlichen Randes des Tiegels kein Auf-Tisch-Gestell vorhanden. Damit wird einerseits die Zugänglichkeit zum Tiegel verbessert, und andererseits wird zusätzlich der Schwenkwinkel für den Tiegel und dessen Volumen, bei minimaler Breite des Gargeräts, maximiert, denn auch seitlich ist kein Gestell unterhalb oder neben dem Tiegel vorhanden, was aber nur für eine der beiden Seitenflächen der Fall ist.

Das Auf-Tisch-Gargerät ist in sich standfest, unabhängig vom Beladungszustand.

Der einem Tiegel zugeordnete Gestellabschnitt ist in Draufsicht beispielsweise L-förmig und verläuft längs des hinteren und eines der beiden seitlichen Ränder. Zwischen dem "L" ist der Tiegel angeordnet. Das seitliche Bauvolumen wird durch das fehlende Gestell an einer Längsseite des Tiegels zusätzlich reduziert.

Das erfindungsgemäße Gargerät kann zwar mit einem einzelnen Tiegel ausgestattet sein, bevorzugt sind jedoch zwei Tiegel nebeneinander angeordnet. Das Auf-Tisch-Gestell ist ein gemeinsames Auf-Tisch-Gestell und ist in Draufsicht T-förmig ausgebildet. Zwischen den Tiegeln verläuft ein Mittelsteg des Gestells. Ein Quersteg des "T" erstreckt sich längs der hinteren Ränder der beiden Tiegel. Beide Tiegel haben also an ihren jeweiligen äußeren Seitenrändern kein Gestell, sondern nur jeweils an dem dem anderen Tiegel zugewandten Seitenrand.

Die Erfindung sieht insbesondere vor, dass der längs des hinteren Tiegelrandes verlaufende Quersteg des L-förmigen oder T-förmigen Gestells alle oder einige der elektronischen Bauteile (bis auf Display und die von außen zu bedienenden Schalter) enthält. Durch diese Idee ist es möglich, weniger oder keine elektronischen Bauteile in den Mittelsteg des L oder des T zu legen, womit dieser schmal ausgeführt werden kann.

Beim Auf-Tisch-Gargerät mit Auf-Tisch-Gestell ist zumindest der Quersteg des L oder T so ausgeführt, dass das Gestell gleichzeitig das dadurch selbsttragende Außengehäuse bildet. Natürlich können für die Montage Öffnungen vorgesehen sein, die durch Blech- oder Kunststoffabdeckungen geschlossen werden.

Wenn der Mittelsteg gegenüber der Oberseite der geschlossenen Deckel nach oben vorsteht, kann er zusätzlich auch als Spritzschutz zumindest in eingeschränktem Umfang dienen, womit verhindert wird, dass Speisen oder Garhilfsmedien wie Wasser oder Öl von einem Tiegel in den benachbarten Tiegel spritzen können.

Die elektrischen Bauteile wie Schütze und Trafos sollten im Quersteg untergebracht sein, denn ihr Gewicht sorgt dafür, dass der Gesamtschwerpunkt des Gargeräts nach hinten und durch die Verteilung nach links bzw. rechts in eine stabile Mitte wandert.

Eine weitere bevorzugte Ausführungsform in diesem Zusammenhang sieht vor, dass im Mittelsteg elektrische Bauteile und/oder flüssigkeitsführende Bauteile untergebracht sind. Sind sowohl elektrische Bauteile als auch flüssigkeitsführende Bauteile vorhanden, sollte eine Trennwand zwischen den Räumen innerhalb des Mittelstegs, in denen elektrische Bauteile untergebracht sind, und Räumen, in denen flüssigkeitsführende Bauteile untergebracht sind, vorhanden sein. Damit ist auch rein räumlich Strom von Wasser getrennt.

Natürlich lässt sich diese Ausführungsform, die auf die Unterbringung der elektrischen Bauteile gerichtet ist, auch bei den zuvor erwähnten Ausführungsformen anwenden und mit ihnen kombinieren.

Im Mittelsteg kann eine frei auskragende Schwenkachse für den zugeordneten Tiegel gelagert sein. Insbesondere bildet die Schwenkachse in ihrem Inneren einen von einem Tiegelboden ausgehenden Ablaufkanal, der längs des Mittelstegs in Richtung zum Quersteg verläuft. Für diese Ausführungsform ist es unnötig, am vorderen Ende des Tiegelbodens bzw. am unteren Ende der vorderen Tiegelwand einen nach unten abstehenden Ablaufhahn oder dergleichen vorzusehen, der sich erneut negativ auf den Schwenkwinkel auswirken würde. Vielmehr kann der Tiegelinhalt, zum Beispiel Wasser oder Reinigungsflüssigkeit mit Wasser, über die Schwenkachse entleert werden. Die Schwenkachse kann in diesem Zusammenhang entweder feststehend sein oder auch in Form eines Doppelrohres ausgeführt sein, wobei das innenstehende Rohr fest ist und das außenstehende Rohr den schwenkbaren Teil des Lagers bildet. Zwischen Innen- und Außenrohr ist dann ein Ringspalt vorhanden, der als Ablaufkanal dient.

Die Kompaktheit wird ferner dadurch verbessert, dass der längs des hinteren Randes verlaufende Abschnitt des Auf-Tisch-Gestells teilweise oder ganz unterhalb des hinteren Randes des Tiegels verläuft. Das bedeutet, das Gestell verläuft, in Draufsicht gesehen, nicht angrenzend an den hinteren Rand des Tiegels, sondern zumindest teilweise, vorzugsweise vollständig unterhalb des Tiegels, wodurch die Bautiefe des Gargeräts bei großem Tiegelvolumen gering gehalten werden kann.

Eine weitere Lösung zur Schaffung eines eine geringe Tiefe aufweisenden Gargeräts besteht darin, dass ein Gargerät nach der eingangs genannten Art im Bereich der Rückseite des Auf-Tisch-Gestells mit einer in Richtung Vorderseite eingezogenen Anschlussnische ausgestattet ist, in der zumindest ein Wasser- und/oder wenigstens ein Elektroanschluss endet. Unter "Wasseranschluss" fällt sowohl ein Frischwasseranschluss heiß und/oder kalt als auch ein Abwasseranschluss. Durch die Anschlussnische stehen die zwangsläufig notwendigen Kupplungsstücke an den Enden der Wasserschläuche oder Elektrokabel nicht mehr gegenüber dem Gargerät nach hinten gegenüber der Rückseite des Geräts vor. Auch werden die Schlauch- und Elektroanschlüsse nicht mehr permanent mechanisch belastet, weil ansonsten sie das am weitesten nach hinten vorstehende Teil des angeschlossenen Gargeräts bilden und oftmals permanent gegen die angrenzende Wand gedrückt werden.

Im nicht verschwenkten Zustand sollte der Tiegel im Bereich seines hinteren Randes auf dem Auf-Tisch-Gestell aufliegen, sodass dieses eine Art Anschlag bildet. Durch das Aufliegen längs des Randes erhöht sich darüber hinaus auch die Stabilität des Geräts und vor allem des Tiegels beim Garen.

Deckel und/oder Tiegel sollten mechanisch und/oder motorisch angetrieben schwenkbar sein. Es kann aber auch zusätzlich eine die Schwenkbewegung unterstützende Gasdruck- oder mechanische Feder vorhanden sein, um die notwendigen motorischen Kräfte zu reduzieren.

Ein erfindungsgemäßes Gargerät ist darüber hinaus gemäß einer Ausführungsform mit einer ausziehbaren Handbrause versehen, die mit einem Schlaufen- oder Wickelmechanismus, vorzugsweise mit einem Aufrollmechanismus für den Schlauch ausgestattet ist. Der Aufrollmechanismus samt des Schlauchs ist im Auf-Tisch-Gestell untergebracht. Im eingezogenen Zustand der Handbrause sind deren Brausekopf, der außerhalb des Auf-Tisch-Geräts greifbar für den Benutzer liegt, und der Schlauch so gelagert, dass der durch Brausekopf und Schlauch definierte Kanal vom Auslass im Brausekopf bis zum Erreichen des Aufrollmechanismus schräg aufwärts verläuft. Dadurch wird verhindert, dass eventuelle Speisereste im Bereich des Brausekopfes zum Kontaminieren des im Schlauch stehenden Wassers führen. Bei der Erfindung verläuft der Schlauch zum Auslass im Brausekopf abwärts. Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine perspektivische Draufsicht auf eine erste Ausführungsform des erfindungsgemäßen Gargeräts,
- Figur 2 das Gargerät von Figur 1 mit hochgeschwenkten Deckeln und einem gekippten Tiegel,
- Figur 3 eine perspektivische Draufsicht auf eine zweite Ausführungsform des erfindungsgemäßen Gargeräts,
- Figur 4 eine perspektivische Seitenansicht des Gargeräts nach Figur 3 mit hochgeschwenkten Deckeln und einem gekippten Tiegel,
- Figur 5 eine perspektivische Ansicht einer dritten Ausführungsform des erfindungsgemäßen Gargeräts, bei dem ein Deckel zur Verbesserung der Übersichtlichkeit weggelassen ist,
- Figur 6 eine Rückansicht des Gargeräts nach Figur 3 mit aufgeschnittener Rückwand,
- Figur 7 eine Längsschnittansicht durch das Gargerät nach Figur 3 längs des Mittelstegs,
- Figur 8 eine Frontansicht des Mittelstegs eines erfindungsgemäßen Gargeräts,
- Figur 9 eine horizontale Schnittansicht durch ein erfindungsgemäßes Gargerät, das ähnlich zu dem in Figur 3 ist, und
- Figur 10 eine Detailansicht des Gestells des Gargeräts nach Figur 9 im Bereich von Solid State Relais.

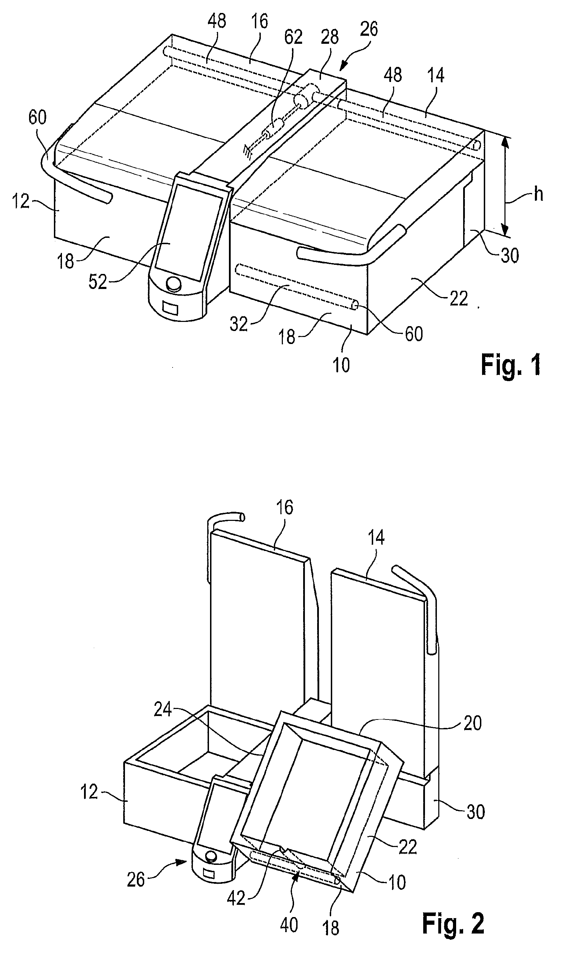

In Figur 1 ist ein Gargerät zum Zubereiten von Speisen dargestellt, welches als Tischgerät ausgeführt ist. Das bedeutet, die maximale Höhe h des Gargeräts, gemessen von der Oberfläche des Tisches, auf dem es aufgesetzt ist, beträgt 400 mm, insbesondere nur maximal 350 mm, bezogen auf den geschlossenen Zustand des Geräts.

Das Gargerät umfasst zwei Tiegel 10, 12, die nach oben offene, innenseitig einstückige Behälter darstellen (siehe Figur 2). Die Tiegel 10, 12 können durch vorzugsweise schwenkbare Deckel 14, 16 geöffnet oder geschlossen werden.

Auf der Unterseite jedes Tiegels 10, 12 sind nicht gezeigte Heizelemente vorgesehen, über die der Tiegelboden elektrisch beheizt werden kann, um in den Tiegel 10, 12 eingebrachte Speisen zu garen oder auch Wasser zu kochen. Die Tiegel sind als Quader ausgebildet.

Jeder Tiegel 10, 12 hat einen Boden, einen vorderen Rand 18 (Vorderseite), einen entgegengesetzten hinteren Rand 20 (Hinterseite) sowie einen ersten Seitenrand 22 und einen entgegengesetzten Seitenrand 24 (Seiten). Die Seitenränder 24 der beiden Tiegel 10, 12 sind einander zugewandt.

Tiegel 10, 12 und Deckel 14, 16 sind an einem Auf-Tisch-Gestell 26 schwenkbar angebracht, welches vorzugsweise gleichzeitig als Gehäuse des Gargeräts ausgeführt ist.

Das Auf-Tisch-Gestell 26 ist in Draufsicht auf das Gargerät T-förmig ausgebildet, mit einem zwischen den benachbarten Tiegeln 10, 12 und den Deckeln 14, 16 verlaufenden Mittelsteg 28 sowie einem mit dem Mittelsteg 28 verbundenen Quersteg 30. Der Quersteg 30 erstreckt sich längs der hinteren Ränder 20 beider Tiegel 10, 12 sozusagen von der linken Außenseite des Gargeräts bis zur entgegengesetzten rechten Außenseite des Gargeräts.

Mittelsteg 28 und Quersteg 30 sind als ineinander übergehende Hohlkörper ausgebildet.

Zumindest der Quersteg 30 des T ist so ausgeführt, dass das Gestell gleichzeitig das dadurch selbsttragende Außengehäuse bildet. Dies gilt im übrigen für alle Ausführungsformen.

Der Mittelsteg 28 kann auch entsprechend ausgeführt sein oder das Gestell kann hier noch einmal verkleidet werden, da das Gestell in diesem Abschnitt großvolumige Einbauteile enthält, die große Einbauöffnungen im Gestell zur Montage erfordern.

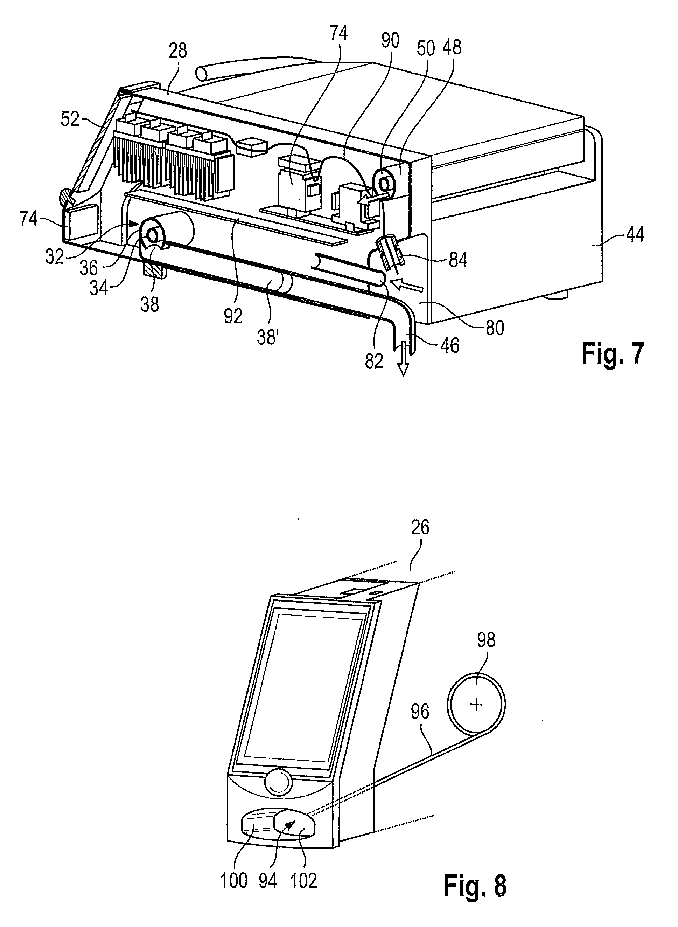

Die beiden Tiegel 10, 12 sind, wie in Figur 2 zu sehen ist, schwenkbar am Gestell, genauer gesagt am Mittelsteg 28 gelagert, indem vom Mittelsteg 28 von gegenüberliegenden Seiten Schwenkachsen 32 (siehe Figuren 1 und 7) in den Boden des Tiegels ragen. Die Schwenkachsen 32 dienen gleichzeitig als Abwasserkanal und haben eine feststehende mittige Lagerachse 34 sowie eine die Lagerachse umgebende Drehachse 36, wobei Lager- und Drehachse 34 bzw. 36 als Rohre ausgeführt sind. Zwischen der Lagerachse 34 und der Drehachse 36 ergibt sich ein Ringspalt 38, der als Ablaufkanal ausgeführt ist.

Die Schwenkachse 32 ist sehr nahe am vorderen Rand 10 angeordnet und liegt relativ weit unten nahe dem Tiegelboden. Jeder Tiegel 10, 12 hat im Bereich seines Tiegelbodens oder des unteren Endes der vorderen Tiegelwand, und zwar im vorderen mittigen Bereich einen wahlweise verschließbaren Auslass 40 (siehe Figur 2), der in geöffnetem Zustand mit dem Ablaufkanal 38 in Strömungsverbindung steht.

Im Bereich des Auslasses 40 ist die Innenseite der vorderen Wand jedes Tiegels 10, 12 mit einer Ausgießrinne 42 versehen, die ein komplettes Ausgießen des Tiegelinhalts bei komplett hochgekipptem Tiegel 10, 12 ermöglicht.

Zwischen Lagerachse 34 und Drehachse 36 sind an einigen Stellen natürlich Lager vorgesehen, sodass sich die Drehachse 36 um die Lagerachse 34 drehen kann.

Die Drehachse 36 hat im Bereich des Mittelstegs 28 (siehe Figur 7) einen Auslass, der mit einem weiteren Abschnitt des Auslasskanals 38' in Verbindung steht, welcher sich entlang des Bodens des Mittelstegs 28 bis zur Rückseite 44 des Gargeräts erstreckt und über einen L-förmigen Ablaufstutzen 46 nach unten endet. An den Ablaufstutzen 46 ist von der Unterseite aus ein Ablaufschlauch anzukoppeln.

Auch die Deckel 14, 16 sind schwenkbar am Auf-Tisch-Gestell 26 gelagert, und zwar (siehe Figur 2) über Schwenkachsen 48, die vom Mittelsteg 28 ausgehen und bei dieser Ausführungsform frei im jeweiligen Deckel 14, 16 enden.

Die Schwenkachse 48, die auch in Figur 7 zu sehen ist, kann optional auch als Zulauf für Frischwasser ausgeführt sein, indem auch hier zwischen einem beispielsweise feststehenden und einem schwenkbaren Teil ein Zulaufkanal 50 entsteht.

Das Gargerät baut extrem kompakt, hat dennoch sehr große Tiegel und ist auf einem normalen Tisch in einer Pröfiküche unterbringbar, ohne über den Tisch seitlich oder nach vorne vorzustehen. Die Tiefe des Gargeräts beträgt vorzugsweise weniger als 850 mm. Abhängig von der Ausführung und Positionierung des Bedienerdisplays 52, welches in Figur 1 nach vorne absteht, können Tiefen von unter 800 mm realisiert werden.

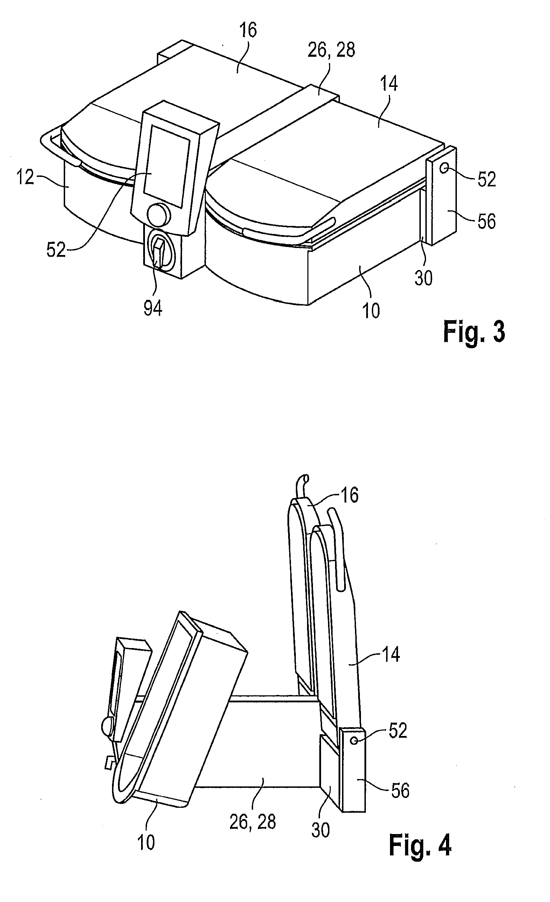

Das große Tiegelvolumen kombiniert mit Kompaktheit und einem großen Kippwinkel der Tiegel 10, 12 von bis zu 60° oder auch mehr wird vor allem durch die besondere Ausführungsform des Auf-Tisch-Gestells 26 erreicht. Das Auf-Tisch-Gestell 26 mit seiner T-Form umrahmt jeden Tiegel 10, 12 nämlich nur in Draufsicht L-förmig und verläuft nur längs des hinteren Randes 20 und eines seitlichen Randes 24. Am vorderen Rand 18 sowie bei der gezeigten Ausführungsform sogar längs des gesamten seitlichen Randes 22 ist das Auf-Tisch-Gestell gestellfrei ausgeführt, das heißt, es ist kein tragender Abschnitt des Gestells an der Außenseite und der Vorderseite jedes Tiegels vorhanden. Damit kann, wie in Figur 2 und für eine andere Ausführungsform in Figur 4 gut zu erkennen ist, der Tiegel komplett geschwenkt werden und sich bis zum unteren Ende des Gargerätes erstrecken.

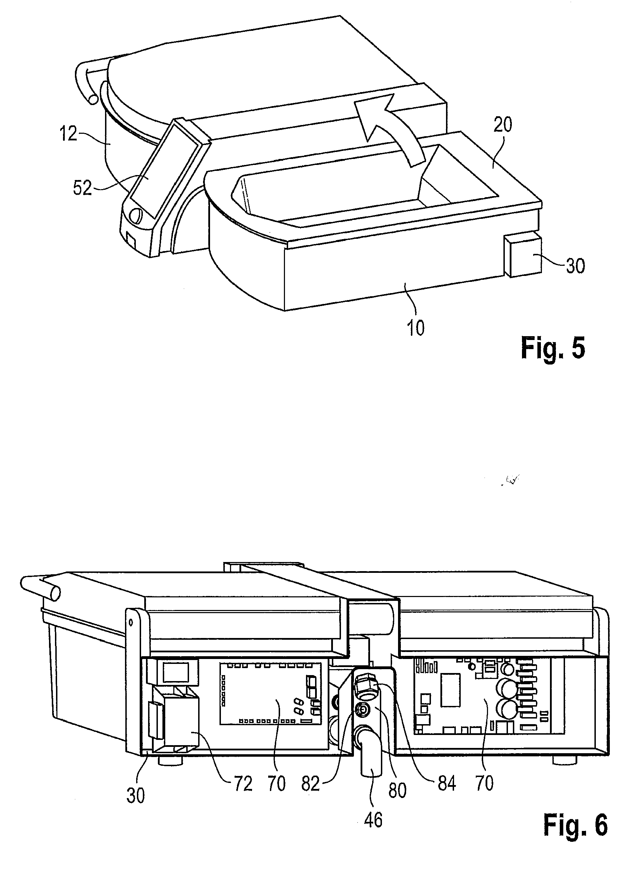

Bei der in Figur 1 dargestellten Ausführungsform endet der Mittelsteg 28 vertikal in etwa bündig mit der Oberseite des Deckels 14, 16, sodass die höchste Stelle des Gargerätes im Bereich des hinteren Endes der Deckel 14, 16 ist. Bei der Ausführungsform nach Figur 5 steht der Mittelsteg 28 gegenüber der Oberseite der Deckel 14, 16 nach oben vor, um einen Spritzschutz zu bilden.

Die Ausführungsform nach den Figuren 3 und 4 entspricht im Wesentlichen der vorhergehenden, wobei das Display 52 jedoch anders angeordnet ist. Bezüglich sämtlicher anderer Merkmale kann jedoch auf die vorhergehenden Ausführungsformen nach den Figuren 1 und 2 verwiesen werden. Neben dem Display 52 besteht noch ein weiterer Unterschied dieser Ausführungsformen darin, dass der Quersteg 30 seitlich etwas gegenüber den Tiegeln 10, 12 vorsteht und ein Halter 56 für die Lagerung der Schwenkachse 48 am zweiten Ende der Schwenkachse 48 vorhanden ist.

Bei sämtlichen Ausführungsformen liegt der hintere Rand 20 jedes Tiegels 10, 12 auf der Oberseite oder auf einem Absatz des Querstegs 30 auf, wenn der jeweilige Tiegel 10, 12 ungekippt ist. Zusätzlich kann auch noch eine Auflagefläche am Mittelsteg 28 vorhanden sein.

Die Schwenkbewegung des Tiegels 10, 12 und auch des zugeordneten Deckels 14, 16 erfolgt vorzugsweise rein mechanisch. Entsprechende Griffe 60 am Deckel 14, 16 oder am Tiegel 10, 12 sind einfach verwirklichbar. Alternativ hierzu sind die beiden Tiegel 10, 12 auch motorisch kippbar.

Die mechanische Schwenk- oder Kippbewegung kann generell durch Gasdruckfedern 62, die in Figur 1 nur symbolisch angedeutet sind, unterstützt werden.

Die Ausführungsform nach Figur 5 ist insofern unterschiedlich zu den vorherigen, als dass sich der Quersteg 30 unterhalb des hinteren Randes 20 der Tiegel 10, 12 erstreckt, sodass er von oben gesehen sogar verdeckt ist. Alternativ hierzu kann der Rand 14 von oben gesehen den Quersteg 30 auch nur teilweise überdecken. Damit lässt sich das innere Tiegelvolumen erhöhen.

Bei dieser Ausführungsform ist insbesondere die Deckellagerung von Bedeutung, hier sollten die Deckel 14, 16 möglichst weit hinten und oben gelagert werden, um ausreichend wegzuschwenken und Platz für das Kippen des Tiegels zu machen. In diesem Zusammenhang kann es sinnvoll sein, die Deckel 14, 16 etwas exzentrisch zu lagern, sodass die Achse 48 beim Hochschwenken selbst auch noch nach oben schwenkt.

Um das Gargerät möglichst kompakt auszuführen und glatte Außenflächen zu erzeugen, ist zumindest ein Teil der elektrischen Bauteile, vorzugsweise sämtliche elektrischen Bauteile, insbesondere aber sind zumindest sämtliche elektronischen Bauteile 70 im Inneren des Gestells 26 untergebracht. In Figur 6 ist zu sehen, dass die elektronischen Bauteile 70 im Bereich der Rückwand vorgesehen sind.

Auch ein Trafo 72 ist im Quersteg 30 untergebracht.

Natürlich können auch elektrische, darunter elektronische Bauteile im Inneren des Mittelstegs 28 vorgesehen sein. Elektrische Bauteile 74 wie Relais oder Ein-Aus-Schalter sind in Figur 7 dargestellt.

Gut zu erkennen ist im Schnitt nach Figur 7 auch, dass sowohl die Wasser-, Abwasser- als auch elektrische Leitungsführung im Inneren des Gestells 26 realisiert ist.

Von der Rückseite 44 aus (siehe Figur 6) erfolgen alle Energieanschlüsse. Hierzu hat die Rückseite eine in Richtung Vorderseite gezogene Anschlussnische 80, in der der Frischwasseranschluss 82, der elektrische Anschluss 84 sowie der Abwasseranschluss mit dem Stutzen 46 enden und vollständig untergebracht sind.

Die Nische 80 ist so tief, dass bei angeschlossenen Kabeln und Schläuchen diese nicht gegenüber der Rückwand 44 nach hinten vorstehen, sodass die Rückwand tatsächlich an eine Wand herangeschoben werden kann.

Figur 7 zeigt die elektrische Leitung 90, die vom Anschluss 84 ausgeht und bis zum Display 52 und zum Ein-Aus-Schalter (elektrisches Bauteil 74 an der Vorderseite) reicht. Der Frischwasseranschluss 82 führt über eine nicht komplett dargestellte Leitung zu dem Kanal 50.

Vorzugsweise ist eine Trennwand 92 (siehe Figur 7) zwischen den elektrischen Bauteilen und der elektrischen Leitungsführung und den Wasser führenden Teilen vorgesehen, sodass der Innenraum im Mittelsteg 28 in zwei Räume untergliedert wird.

Diese wie auch die übrigen Merkmale der verschiedenen Ausführungsformen der Gargeräte können beliebig miteinander kombiniert werden.

In Figur 8 ist eine weitere Möglichkeit, das Gargerät zu optimieren, dargestellt, die ebenfalls mit sämtlichen übrigen gezeigten Merkmalen der anderen Gargeräte kombiniert werden kann.

Das Gargerät hat integriert in den Mittelsteg 26 eine ausziehbare Handbrause. Die Handbrause umfasst einen Brausekopf 94 sowie einen vom Brausekopf ausgehenden Schlauch 96, der in einem Aufrollmechanismus 98 endet, welcher im Mittelsteg 26 untergebracht ist und mit dem Frischwasseranschluss 82 gekoppelt ist.

Der Brausekopf 94 (auch in Figur 3 gezeigt) ist in einer Halterung 100 aufgenommen, deren Form so auf den Brausekopf 94 abgestimmt ist, dass der Brausekopf bei eingezogener Brause eine definierte Ausrichtung hat. In dieser Ausrichtung liegt der Auslass 102 am Brausekopf 94 waagerecht oder nach unten weisend. Die Schlauchführung vom Brausekopf 94 bis zum Aufrollmechanismus 98 ist schräg aufwärts gerichtet. Damit ergibt sich ein schräg aufwärts gerichteter, definierter Frischwasserkanal.

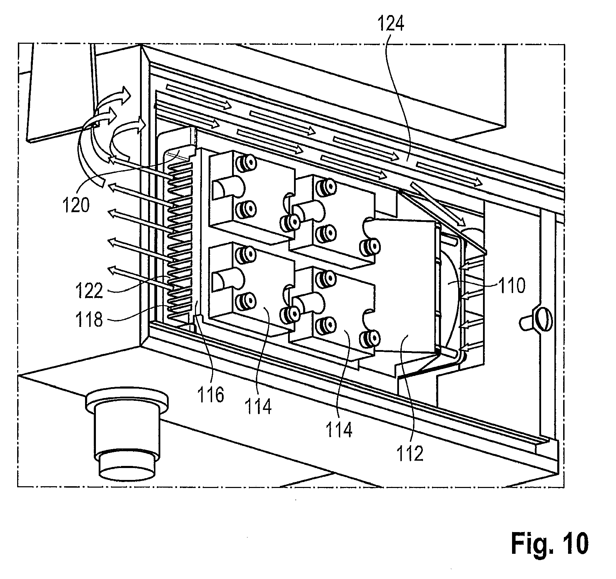

In Figur 10 ist eine weitere Ausführungsform der Erfindung bezüglich der Anordnung und Unterbringung der elektrischen und elektronischen Bauteile innerhalb des Gestells dargestellt.

Wie auch bei den anderen Ausführungsformen ist das Gestell im vorliegenden Fall gleichzeitig das Gehäuse und besteht aus mehreren ineinander übergehenden, im Querschnitt rechteckigen, rohrförmigen Abschnitten, die sich zu einem "T" zusammensetzen, wobei der Innenraum des "T"-förmigen Gestells eine große Kammer bildet.

Ebenfalls wie auch bei den übrigen Ausführungsformen ist das Gestell zur Umgebung hin geschlossen, hat also keine Zuluft- oder Abluftschlitze. Damit bildet das Gestell in sich einen geschlossenen Kühlraum.

Wie auch bei den übrigen Ausführungsformen, die vorliegend schon erläutert worden sind, sind sämtliche elektronischen Bauteile 70, vorzugsweise sogar sämtliche elektrischen Bauteile im Inneren des Gestells untergebracht.

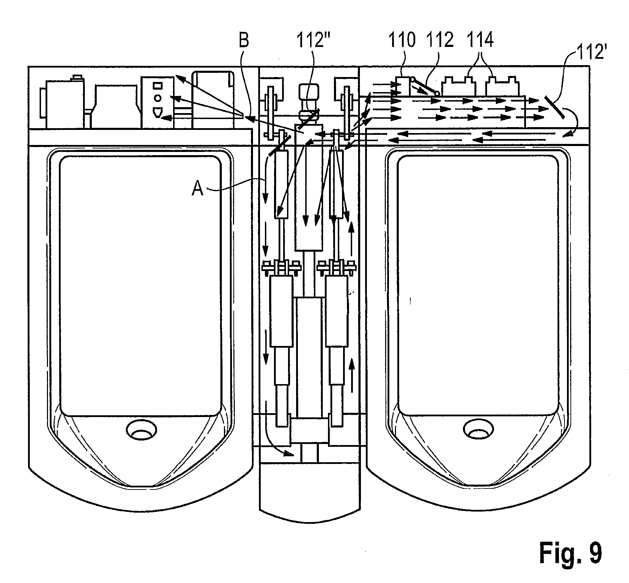

Bei den übrigen Ausführungsformen ist es zwar nicht gezeigt, es gilt jedoch auch für diese, dass im Inneren des Gestells eine aktive Kühleinrichtung für die elektronischen und/oder elektrische Bauteile vorhanden ist. In Figur 9 ist diese Kühleinrichtung erstmals explizit dargestellt. Es handelt sich um eine elektrisch angetriebene Kühleinheit in Form eines Kühllüfters 110, der in einem seitlichen Schenkel des "T" untergebracht ist.

Der Kühllüfter 110 ist in der Nähe desjenigen elektrischen Bauteils, das sich im Inneren des Gestells 26 befindet, angeordnet, welches im Betrieb am heißesten wird.

In der dargestellten Ausführungsform ist dieses, den höchsten Kühlbedarf aufweisende Bauteil ein Solid States Relais, abgekürzt SSR-Bauteil.

Der Kühllüfter 110 ist mit einem Luftleitelement 112 in Form eines Blechs gekoppelt, genauer gesagt an ihm befestigt, welches die angesaugte Luft zu mehreren, unmittelbar hintereinander angeordneten Relais 114 fördert.

Wie in Figur 10 zu erkennen ist, sind die Relais 114 auf einem gemeinsamen Komponententräger 116 befestigt. Vorzugsweise liegen sie unmittelbar an ihm an.

Der Komponententräger ist aus einem Metall, hier Leichtmetall in Form von Aluminium. Auf der Vorderseite trägt der Komponententräger die Relais 114, von der Rückseite stehen mehrere angeformte Kühlrippen 118 ab. Diese Kühlrippen 118 erstrecken sich bis nahe zu oder bis zum Kontakt an eine Wand 120, um einen Kühlkanal 122 zu bilden, der durch die Rippen 118 in Teilkanäle untergliedert ist.

Die Wand 120 kann auch die Wand des Gestells 26 bilden.

Ein am Ende des Kühlkanals 122 sitzendes, in Figur 9 zu sehendes Luftleitelement 112' lenkt die Luft aus dem Kühlkanal 122 um, so dass sie in Gegenrichtung in einem weiteren, angrenzenden Kühlkanal 124 vom Ende eines Schenkels des "T" wieder zurück in Richtung Mittelsteg strömt, und zwar vorzugsweise an der Wand des Gehäuses 26 entlang.

Im Bereich des Mittelstegs ist ein oder sind mehrere weitere Luftleitelemente 112" vorgesehen, die die Luft längs des Pfeiles A vorzugsweise entlang einer Seite des Gestells im Bereich des Mittelstegs nach vorne lenken und längs des Pfeiles B in den anderen Schenkel des "T" führen.

Die zuströmende warme Luft kühlt sich in diesen Bereichen ab und kann gezielt längs weiterer Kühlkanäle, die durch Bauteile und Luftleitelemente abgegrenzt sind, als Ansaugluft wieder zum Kühllüfter 110 strömen.

Die dargestellte aktive Kühleinrichtung ist filterlos ausgeführt und daher wartungsfrei.

Für alle Ausführungsformen gilt, dass der längs des hinteren Tiegelrandes verlaufende Quersteg des L-förmigen oder T-förmigen des Gestells alle oder einige der elektronischen Bauteile (bis auf Display und die von außen zu bedienenden Schaltern) enthalten kann.

Die dargestellte Unterbringung sämtlicher elektronischer Bauteile (bis auf Display und die von außen zu bedienenden Schalter) im Gestell kann auch bei normalen Standgeräten angewandt werden, bei denen das Gestell bis zum Boden reicht.

## Patentansprüche

1. Gargerät zum Zubereiten von Speisen, mit wenigstens einem kippbar gelagerten, beheizbaren Tiegel (10, 12), einem vorzugsweise schwenkbaren Deckel (14, 16) zum Öffnen und Schließen des Tiegels (10, 12) sowie einem Gestell (26), das den Tiegel (10, 12) trägt, wobei der Tiegel (10, 12) einen Boden und einen vorderen, einen hinteren sowie seitliche Ränder (18-24) hat und wobei im Gestell (26) elektronische Bauteile (70) untergebracht sind, **dadurch gekennzeichnet, dass** das Gestell (26) einen zur Umgebung geschlossenen Kühlraum bildet und dass eine aktive Kühleinrichtung für die elektronischen oder elektrischen Bauteile (70) vorhanden ist, mit wenigstens einer im Inneren des Gestells (26) untergebrachten, elektrisch angetriebenen Kühleinheit.

2. Gargerät nach Anspruch 1, **dadurch gekennzeichnet, dass** die elektrisch angetriebene Kühleinheit ein Kühllüfter (110) ist.

3. Gargerät nach Anspruch 1 oder 2, **dadurch gekennzeichnet, dass** die aktive Kühleinrichtung filterlos ausgeführt ist.

4. Gargerät nach einem der vorhergehenden Ansprüche, **dadurch gekennzeichnet, dass** im Gestell (26) Luftleitelemente (112, 112', 112") untergebracht sind.

5. Gargerät nach einem der vorhergehenden Ansprüche, **dadurch gekennzeichnet, dass** ein gegenüber dem Gestell (26) als separates Teil ausgebildeter Komponententräger (116) aus Metall im Inneren des Gestells (26) vorgesehen ist, an dessen einer Seite zumindest ein elektronisches oder elektrisches Bauteil, insbesondere zumindest ein Solid States Relais (114), sitzt und an dem von einer anderen Seite Kühlrippen (118) abstehen.

6. Gargerät nach Anspruch 5, **dadurch gekennzeichnet, dass** zwischen dem Komponententräger (116) und der Innenseite des Gestells ein Kühlkanal (122) gebildet ist, der durch die Rippen in Teilkanäle untergliedert wird.

7. Gargerät nach einem der vorhergehenden Ansprüche, **dadurch gekennzeichnet, dass** das Gestell ein Auf-Tisch-Gestell und das Gargerät ein Auf-Tisch-Gargerät ist.

8. Gargerät nach Anspruch 7, **dadurch gekennzeichnet, dass** das Auf-Tisch-Gestell (26) am vorderen Rand (18) des Tiegels (10, 12) gestellfrei ausgeführt ist.

9. Gargerät nach einem der vorhergehenden Ansprüche, **dadurch gekennzeichnet, dass** der einem Tiegel (10, 12) zugeordnete Gestellabschnitt in Draufsicht L-förmig ist und längs des hinteren und eines seitlichen Randes (20, 24) verläuft.

10. Gargerät nach einem der vorhergehenden Ansprüche, **dadurch gekennzeichnet, dass** zwei nebeneinander angeordnete Tiegel (10, 12) vorhanden sind und dass das Auf-Tisch-Gestell (26) in Draufsicht T-förmig ausgebildet ist, mit einem zwischen den Tiegeln (10, 12) verlaufenden Mittelsteg (28) und einem längs der hinteren Ränder verlaufenden Quersteg (30).

11. Gargerät nach Anspruch 10, **dadurch gekennzeichnet, dass** im Quersteg (30) zumindest ein Transformator (72) untergebracht ist.

12. Gargerät nach Anspruch 10 oder 11, **dadurch gekennzeichnet, dass** im Mittelsteg (28) elektrische Bauteile (74) und/oder flüssigkeitsführende Bauteile untergebracht sind

13. Gargerät nach Anspruch 12, **dadurch gekennzeichnet, dass** eine Trennwand (92) zwischen Räumen innerhalb des Mittelstegs (28), in denen elektrische Bauteile (74) untergebracht sind, und Räumen, in denen flüssigkeitsführende Bauteile untergebracht sind, vorhanden ist.

14. Gargerät nach einem der vorhergehenden Ansprüche, **dadurch gekennzeichnet, dass** das Gestell (26) durch zusammengesetzte Hohlkörper gebildet ist und/oder dass das Auf-Tisch-Gestell (26) das feststehende Gehäuse des Gargeräts bildet.

## Claims

1. A cooking device for preparing food, comprising at least one tiltably mounted, heatable pan (10, 12), a preferably swiveling lid (14, 16) for opening and closing the pan (10, 12), and a frame (26) which carries the pan (10, 12), the pan (10, 12) having a bottom, and front, rear and lateral edges (18-24), and electronic components (70) being accommodated in the frame (26), **characterized in that** the frame (26) forms a cooling space closed off to the environment, and that an active cooling means for the electronic or electric components (70) is provided, including at least one electrically driven cooling unit accommodated in the interior of the frame (26).

2. The cooking device according to claim 1, **characterized in that** the electrically driven cooling unit is a cooling fan (110).

3. The cooking device according to claim 1 or 2, **characterized in that** the active cooling means is designed to be filterless.

4. The cooking device according to any of the preceding claims, **characterized in that** air guide elements (112, 112', 112") are accommodated in the frame (26).

5. The cooking device according to any of the preceding claims, **characterized in that** provided in the interior of the frame (26) is a component carrier (116) made of metal, which is formed as a separate part with respect to the frame (26) and on one side of which at least one electronic or electric component, in particular at least one solid-state relay (114), is placed, and which has cooling ribs (118) projecting from another side thereof.

6. The cooking device according to claim 5, **characterized in that** a cooling duct (122) is formed between the component carrier (116) and the inside of the frame, the cooling duct being subdivided into partial ducts by the ribs.

7. The cooking device according to any of the preceding claims, **characterized in that** the frame is a table-top frame and the cooking device is a table-top cooking device.

8. The cooking device according to claim 7, **characterized in that** the table-top frame (26) is designed to be frame-free at the front edge (18) of the pan (10, 12).

9. The cooking device according to any of the preceding claims, **characterized in that** the frame section associated with a pan (10, 12) is L-shaped in a top view and extends along the rear edge and one side edge (20, 24).

10. The cooking device according to any of the preceding claims, **characterized in that** two pans (10, 12) arranged side by side are provided, and that the table-top frame (26) is formed to be T-shaped in a top view, with a middle web (28) extending between the pans (10, 12) and a transverse web (30) extending along the rear edges.

11. The cooking device according to claim 10, **characterized in that** at least one transformer (72) is accommodated in the transverse web (30).

12. The cooking device according to claim 10 or 11, **characterized in that** electrical components (74) and/or liquid-carrying components are accommodated in the middle web (28).

13. The cooking device according to claim 12, **characterized in that** a partition wall (92) is provided between spaces within the middle web (28) in which electrical components (74) are accommodated and spaces in which liquid-carrying components are accommodated.

14. The cooking device according to any of the preceding claims, **characterized in that** the frame (26) is formed by hollow bodies put together and/or that the table-top frame (26) forms the fixed housing of the cooking device.

## Revendications

1. Appareil de cuisson pour la préparation d'aliments, présentant au moins un poêlon (10, 12) chauffant monté basculant, un couvercle (14, 16) de préférence pivotant pour l'ouverture et la fermeture du poêlon (10, 12), et un cadre (26) qui porte le poêlon (10, 12), le poêlon (10, 12) présentant un fond et un bord avant, un bord arrière et des bords latéraux (18-24), et des composants électroniques (70) étant logés dans le cadre (26), **caractérisé en ce que** le cadre (26) forme un espace de refroidissement fermé vers l'environnement et **en ce qu'**un moyen de refroidissement actif pour les composants électroniques ou électriques (70) est présent, comportant au moins une unité de refroidissement qui est entraînée de manière électrique et qui est logée à l'intérieur du cadre (26).

2. Appareil de cuisson selon la revendication 1, **caractérisé en ce que** l'unité de refroidissement entraînée de manière électrique est un ventilateur de refroidissement (110).

3. Appareil de cuisson selon la revendication 1 ou 2, **caractérisé en ce que** le moyen de refroidissement actif est réalisé sans filtre.

4. Appareil de cuisson selon l'une des revendications précédentes, **caractérisé en ce que** des éléments de guidage d'air (112, 112', 112") sont logés dans le cadre (26).

5. Appareil de cuisson selon l'une des revendications précédentes, **caractérisé en ce qu'**il est prévu à l'intérieur du cadre (26) un support de composantes (116) en métal réalisé sous forme de pièce séparée par rapport au cadre (26), au moins un composant électronique ou électrique, en particulier au moins un relais à semi-conducteur (114) étant agencé de l'un de ses côtés et des nervures de refroidissement (118) faisant saillie de l'autre côté.

6. Appareil de cuisson selon la revendication 5, **caractérisé en ce qu'**un canal de refroidissement (122) divisé en canaux partiels par les nervures est réalisé entre le support de composantes (116) et le côté intérieur du cadre.

7. Appareil de cuisson selon l'une des revendications précédentes, **caractérisé en ce que** le cadre est un cadre sur table et l'appareil de cuisson est un appareil de cuisson sur table.

8. Appareil de cuisson selon la revendication 7, **caractérisé en ce que** le cadre sur table (26) est réalisé sans cadre au niveau du bord avant (18) du poêlon (10, 12).

9. Appareil de cuisson selon l'une des revendications précédentes, **caractérisé en ce que** le tronçon de cadre associé à un poêlon (10, 12) est en forme de L dans une vue de dessus et s'étend le long du bord arrière et d'un bord latéral (20, 24).

10. Appareil de cuisson selon l'une des revendications précédentes, **caractérisé en ce que** deux poêlons (10, 12) agencés l'un à côté de l'autre sont présents et **en ce que** le cadre sur table (26) est réalisé en forme de T dans une vue de dessus, avec une barrette médiane (28) qui s'étend entre les poêlons (10, 12) et une barrette transversale (30) qui s'étend le long des bords arrière.

11. Appareil de cuisson selon la revendication 10, **caractérisé en ce qu'**au moins un transformateur (72) est logé dans la barrette transversale (30).

12. Appareil de cuisson selon la revendication 10 ou 11, **caractérisé en ce que** des composants électriques (74) et/ou des composants conducteurs de liquide sont logés dans la barrette médiane (28).

13. Appareil de cuisson selon la revendication 12, **caractérisé en ce qu'**une paroi de séparation (92) est présente entre des espaces à l'intérieur de la barrette médiane (28) dans lesquels des composants électriques (74) sont logés, et des espaces dans lesquels des composants conducteurs de liquide sont logés.

14. Appareil de cuisson selon l'une des revendications précédentes, **caractérisé en ce que** le cadre (26) est formé par des corps creux assemblés et/ou **en ce que** le cadre sur table (26) forme le boîtier stationnaire de l'appareil de cuisson.
